# FASCICULE DE BREVET EUROPEEN

(11) **EP 0 969 205 B1**
(45) Date de publication et mention de la délivrance du brevet: **28.04.2004**
(21) Numéro de dépôt: 99401514.7
(22) Date de dépôt: 18.06.1999
(51) Int. Cl.: F03C 1/24

(54) **Moteur hydraulique compact**
Hydromotor in Kompaktbauweise
Compact hydraulic motor

(30) Priorité: 29.06.1998 FR 9808209
(43) Date de publication de la demande: 05.01.2000
(73) Titulaire: POCLAIN HYDRAULICS INDUSTRIE, 60411 Verberie (FR)
(72) Inventeur: Allart, Bernard, 60800 Crey-en-Valois (FR); Bigo, Louis, 60200 Compiegne (FR); Perot, Marc, 60330 Eve (FR)
(74) Mandataire: Intès, Didier Gérard André

(56) Documents cités:
- FR-A- 2 291 375
- FR-A- 2 606 092
- FR-A- 2 644 210
- FR-A- 2 673 684
- FR-A- 2 678 322
- FR-A- 2 694 342
- GB-A- 1 546 857

## Description

La présente invention concerne un moteur hydraulique comprenant :
- un carter fixe,
- un organe de réaction solidaire du carter,
- un bloc-cylindres, qui est monté à rotation relative autour d'un axe de rotation par rapport audit organe de réaction et qui comporte une pluralité d'ensembles de cylindres et de pistons, disposés radialement par rapport à l'axe de rotation et susceptibles d'être alimentés en fluide sous pression,
- un distributeur interne de fluide, solidaire du carter vis-à-vis de la rotation autour de l'axe de rotation et comportant des conduits de distribution susceptibles de mettre les cylindres en communication avec des conduits d'alimentation et d'échappement de fluide,
- un dispositif de freinage comprenant un crabot ayant une première et une deuxième séries de dents, respectivement solidaires en rotation du carter et du bloc-cylindres, ainsi qu'un piston de commande de l'engagement et du désengagement des dents de ce crabot,
le moteur ayant au moins deux cylindrées distinctes de fonctionnement et comprenant un tiroir de sélection de cylindrée situé à l'intérieur du carter.

Il s'agit par exemple d'un moteur lent, à basse vitesse et à fort couple, un tel moteur entraînant classiquement l'arbre de sortie à des vitesses de rotation en régime normal de l'ordre de 75 à 200 tr/min et étant capable de générer des cylindrées allant jusqu'à 6 l/tr, voire une dizaine de litres par tour.

Un tel moteur sert en particulier à l'entraînement d'un arbre de réducteur planétaire destiné à la translation d'engins chenillés, et est connu par exemple du document FR-A-2 673 684.

On sait que le fait d'utiliser un moteur lent pour l'entraînement d'un arbre de réducteur planétaire plutôt qu'un moteur rapide permet de réduire le nombre d'étages du réducteur (par exemple ramené à un seul étage) pour obtenir une même vitesse à la sortie du réducteur, de l'ordre de 30 à 70 tr/min.

Ainsi, l'utilisation d'un moteur lent associé à un réducteur permet de réduire l'encombrement axial de l'ensemble constitué par le moteur et le réducteur.

L'invention vise à diminuer encore cet encombrement axial en s'attachant à réduire l'encombrement axial du moteur ou, tout au moins, en proposant un ensemble moteur extrêmement compact.

Ce but est atteint grâce au fait qu'un espace annulaire est ménagé dans le carter, autour du distributeur, du côté de la face radiale du bloc-cylindres adjacente au distributeur, au fait que la première série de dents du crabot et le piston de commande sont disposés dans cet espace annulaire et au fait que la deuxième série de dents est solidaire de ladite face radiale du bloc-cylindres, au voisinage de l'extrémité radiale externe de cette face radiale, de sorte que les dents du crabot s'étendent dans une région du moteur éloignée de l'axe de rotation.

Cette disposition présente plusieurs avantages. Tout d'abord, le crabot de freinage n'est pas disposé dans le prolongement axial du distributeur, mais autour de celui-ci, de sorte que le dispositif de freinage est logé dans l'encombrement axial du distributeur, ce qui réduit en conséquence la longueur du carter du moteur. La deuxième série de dents du crabot est solidaire de la face radiale du bloc-cylindres, ce qui simplifie l'assemblage des différents éléments du moteur et permet un passage direct du couple de freinage par le bloc-cylindres. De plus, les dents du crabot par lesquelles passe le couple de freinage sont situées dans une région de grand diamètre du moteur, ce qui permet de limiter considérablement les risques d'usure prématurée ou de rupture des pièces du moteur puisque, pour un même couple de freinage, les efforts exercés sur les pièces par lesquelles passe ce couple sont inversement proportionnels à la distance de ces pièces par rapport à l'axe de rotation du moteur.

Avantageusement, le tiroir de sélection de cylindrée est disposé dans un alésage axial situé à l'intérieur du distributeur et est mobile entre au moins une première et une deuxième position à l'intérieur de cet alésage, ce tiroir présentant une gorge de sélection qui est située sur sa périphérie axiale. De plus, les conduits de distribution comprennent une première série de conduits de distribution qui sont raccordés en permanence à une première enceinte de distribution qui est elle-même raccordée en permanence à un premier des deux conduits d'alimentation et d'échappement, une deuxième série de conduits de distribution qui sont raccordés en permanence à une deuxième enceinte de distribution qui est elle-même raccordée en permanence au deuxième des deux conduits d'alimentation et d'échappement, ainsi qu'une troisième série de conduits de distribution qui, dans la première position du tiroir de sélection, sont raccordés aux conduits de la première série de conduits de distribution par la gorge de sélection en étant isolés des conduits de la deuxième série et qui, dans la deuxième position du tiroir de sélection, sont raccordés aux conduits de la deuxième série de conduits de distribution par la gorge de sélection en étant isolés des conduits de la première série, chacune des première, deuxième et troisième séries de conduits de distribution comprenant au moins un conduit qui s'ouvre dans l'alésage axial.

Cette disposition permet de limiter encore l'encombrement axial du moteur par rapport à un moteur classique à deux cylindrées. En effet, pour ces moteurs classiques, les conduits de distribution des première, deuxième et troisième séries sont mis en communication avec les conduits principaux d'alimentation et d'échappement du moteur par trois gorges, une pour chaque série, qui sont disposées successivement sur la périphérie axiale du distributeur. Dans la configuration avantageuse de l'invention, la première enceinte de distribution à laquelle sont raccordés les conduits de la première série peut comprendre une première gorge située sur la périphérie axiale externe du distributeur et reliée au premier des conduits d'alimentation et d'échappement, tandis que la deuxième enceinte de distribution peut être reliée au deuxième de ces conduits par une deuxième gorge située sur la périphérie axiale externe du distributeur. En revanche, il n'est pas nécessaire de prévoir une troisième gorge pour relier les conduits de la troisième série à l'un ou l'autre des conduits d'alimentation et d'échappement, puisque la gorge de sélection du tiroir, dans la mesure où ce dernier est disposé sur l'axe du moteur, met directement les conduits de la troisième série en communication avec ceux de la première ou ceux de la deuxième série, selon la position du tiroir. Il suffit à cet effet qu'au moins un conduit de chacune des première, deuxième et troisième séries débouche dans l'alésage axial dans lequel le tiroir est monté mobile, et que les conduits de chaque série puissent être reliés entre eux.

Avantageusement, le bloc-cylindres présente une face radiale plane de communication, tandis que le distributeur présente une face radiale plane de distribution qui est maintenue en appui contre ladite face de communication par des moyens de poussée axiale et le moteur comporte un palier unique de reprise des efforts radiaux et de reprise des efforts exercés axialement dans le sens de poussée desdits moyens de poussée axiale.

Ainsi, on met à profit l'existence de la poussée du distributeur sur le bloc-cylindres pour n'utiliser qu'un seul palier de roulement (le palier axial et le palier orthogonal sont réunis en un palier unique). Le palier unique peut comprendre des roulements coniques, ou des roulements à billes à deux points de contact. Ainsi, l'encombrement axial du moteur est diminué par rapport à celui de moteurs plus classiques, comprenant deux paliers à roulements coniques disposés l'un à la suite de l'autre.

Avantageusement, le palier unique présente un centre de poussée qui est situé, sur l'axe de rotation du moteur, au voisinage de l'intersection de cet axe avec le plan radial défini par les axes radiaux des pistons du bloc-cylindres.

En effet, lors du fonctionnement du moteur, du fait de la coopération successive des différents pistons avec la came, le bloc-cylindres est soumis à des efforts parasites qui tendent à le faire basculer par rapport à l'axe de rotation. Le palier de roulement et l'effort exercé axialement le distributeur sur le bloc-cylindres doivent permettre de compenser ces efforts parasites. Lorsque le centre de poussée du palier est situé au voisinage de l'intersection de l'axe de rotation avec le plan radial défini par les axes radiaux des pistons du bloc-cylindres, ces efforts peuvent être plus aisément compensés, sans qu'il soit nécessaire que le distributeur exerce un effort axial de poussée très important sur le bloc-cylindres.

Il est avantageux que des valves de gestion du fonctionnement du moteur soient disposées dans des alésages pratiqués dans le carter du moteur.

Dans ce cas, on prévoit avantageusement que certaines, au moins, desdites valves s'étendent transversalement par rapport à l'axe de rotation du moteur et soient situées de l'autre côté du distributeur par rapport au bloc-cylindres.

Ces valves sont par exemple des valves qui assurent l'alimentation en fluide d'une conduite de désactivation du piston de commande (engagement et désengagement des dents du crabot de freinage), une valve de limitation de la vitesse du moteur (permettant un freinage hydraulique), des clapets-navettes permettant le raccordement sélectif de certaines conduites secondaires du moteur avec les conduites principales ou encore des clapets anti-retour voire, de façon générale, tout type de vanne permettant de gérer divers paramètres de fonctionnement du moteur.

En disposant ces valves dans le carter du moteur, on assure l'homogénéité et la compacité de l'ensemble constitué par le moteur et les valves de gestion de son fonctionnement. En disposant ces valves transversalement, on évite qu'elles ne soient l'occasion d'une trop grande augmentation de l'encombrement axial total du moteur. En particulier, dans la mesure où, conformément à l'invention, les éléments du crabot de freinage sont disposés autour du distributeur, l'espace axial qui était auparavant utilisé par le dispositif de freinage peut être mis à profit pour disposer les valves de gestion du fonctionnement, de sorte que, pour un même encombrement axial total du moteur, on peut, par rapport à l'art antérieur, disposer également les valves dans le moteur.

Par ailleurs, en disposant ces valves de l'autre côté du distributeur par rapport au bloc-cylindres, on permet que les conduits sur lesquels elles sont disposées soient aisément accessibles et on n'augmente pas l'encombrement radial du moteur. On obtient donc un moteur doté de valves de gestion de son fonctionnement, dans un encombrement réduit aussi bien axialement que radialement.

Selon une disposition avantageuse, le tiroir de sélection de cylindrée est disposé dans un alésage axial ménagé dans le distributeur et est mobile dans cet alésage entre au moins une première et une deuxième position, le tiroir de sélection étant constamment rappelé vers l'une de ses positions dite position de repos par des moyens élastiques de rappel ; l'alésage axial présente, du côté du bloc-cylindres, un premier élément de paroi radiale solidaire du distributeur tandis que, du côté du distributeur opposé au bloc-cylindres, il débouche sur un deuxième élément de paroi radiale solidaire du carter de sorte que, dans la position de repos du tiroir, l'ensemble formé par le tiroir et les moyens élastiques de rappel coopère avec les premier et deuxième éléments de paroi radiales pour solliciter le distributeur en appui contre le bloc-cylindres.

Cette disposition est extrêmement avantageuse. En effet, lors du fonctionnement du moteur, le distributeur est généralement maintenu hydrauliquement en appui sur le bloc-cylindres, du fait de la conformation étagée de la face cylindrique externe de la distribution dans laquelle sont ménagées les gorges de raccordement des conduits de distribution aux conduits principaux, et de la pression de fluide régnant dans ces conduits.

Toutefois, il est nécessaire d'assurer un appui de la face de distribution sur la face de communication même à l'arrêt du moteur, pour éviter des fuites importantes entre ces deux faces lors du démarrage du moteur, fuites qui pourraient même empêcher la mise en rotation du bloc-cylindres. Ainsi, il est classique de prévoir un ou plusieurs ressorts spécifiquement dédiés à cette mise en appui du distributeur sur le bloc-cylindres à l'arrêt du moteur.

Dans cette disposition de l'invention, cette mise en appui est directement réalisée grâce à la conformation originale du tiroir et des moyens élastiques de rappel de ce dernier. Il n'est donc pas nécessaire de prévoir un ou plusieurs ressorts supplémentaires en plus des moyens élastiques de rappel du tiroir. Le nombre de pièces du moteur est ainsi limité leur assemblage est extrêmement simplifié.

L'invention sera bien comprise et ses avantages apparaîtront mieux à la lecture de la description détaillée qui suit, d'un mode de réalisation représenté à titre d'exemple non limitatif. La description se réfère aux dessins annexés sur lesquels :
- la figure 1 est une vue schématique en coupe axiale d'un moteur conforme à l'invention,
- la figure 2 est une vue agrandie de la partie II de la figure 1, et
- la figure 3 est une section selon la ligne III-III de la figure 1.

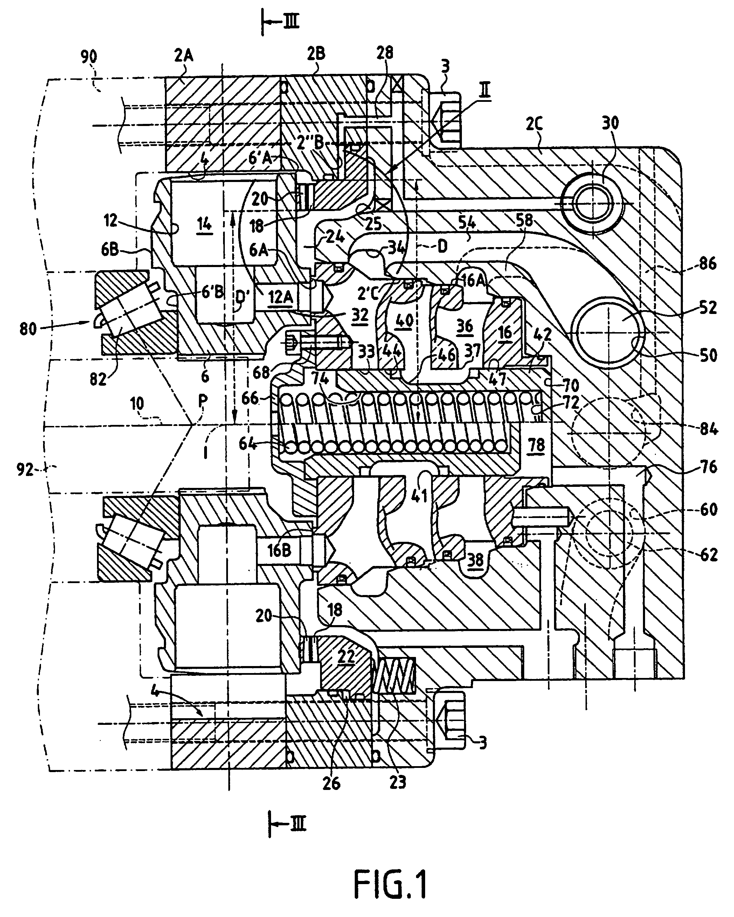

Pour faciliter la compréhension de la constitution et du fonctionnement du moteur, on a représenté sur la figure 1 certains éléments qui ne se trouvent pas dans le même plan de coupe axial. C'est par exemple le cas des conduits de distribution des différentes séries de conduits. C'est pourquoi les hachures sont interrompues dans certaines zones.

La figure 1 montre un moteur hydraulique comprenant un carter fixe en trois parties 2A, 2B et 2C qui sont assemblées par des vis 3. Le moteur comprend un organe de réaction constitué par une came de réaction ondulée 4 ménagée sur la partie 2A du carter.

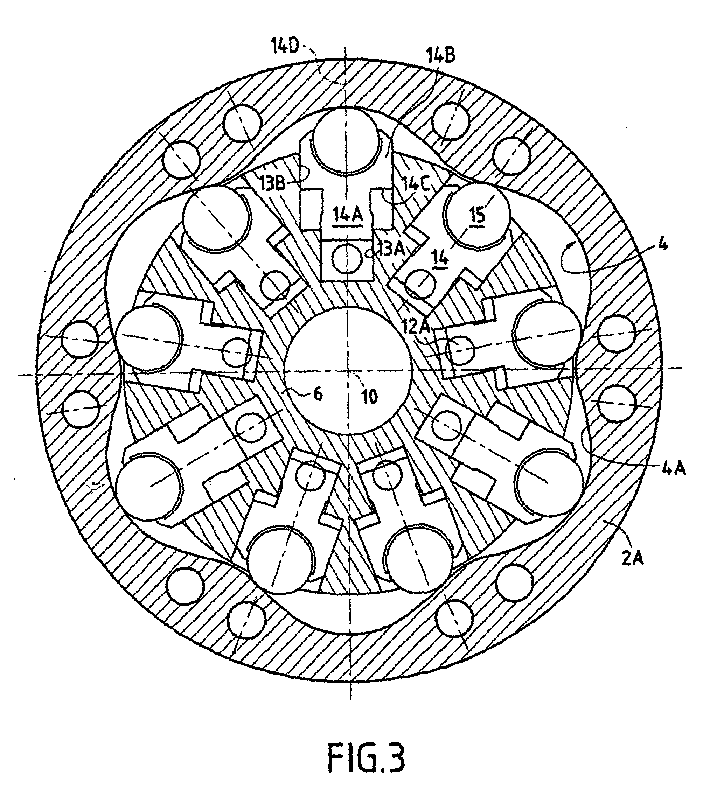

Le moteur comprend encore un bloc-cylindres 6 qui est monté à rotation relative autour d'un axe de rotation 10 par rapport à la came 4 et qui comporte une pluralité de cylindres radiaux 12, susceptibles d'être alimentés en fluide sous pression et à l'intérieur desquels sont montés coulissants des pistons radiaux 14 (non représentés sur la figure 1, mais sur la figure 3).

Le moteur comprend encore un distributeur interne de fluide 16, solidaire du carter vis-à-vis de la rotation autour de l'axe 10 et comprenant des conduits de distribution susceptibles de communiquer avec les cylindres 12 pour mettre ces derniers en communication avec des conduits principaux du moteur qui servent à l'alimentation et à l'échappement de fluide.

Le moteur comporte un dispositif de freinage qui comprend un crabot ayant une première série de dents 18 solidaires en rotation du carter et une deuxième série de dents 20 solidaires en rotation du bloc-cylindres. Ce dispositif de freinage comprend également un piston 22 qui sert à la commande de l'engagement et du désengagement des dents de ce crabot. On voit que le piston de commande 22 est disposé dans un espace annulaire 24 qui est ménagé dans le carter, autour du distributeur 16, du côté de la face radiale 6A du bloc-cylindres 6 adjacente à ce distributeur. En d'autres termes, l'espace annulaire 24 est situé à proximité de la face radiale 6A du bloc-cylindres, dans le carter et autour du distributeur.

La partie 2C du carter, couramment dénommée "couvercle de distribution", se trouve autour du distributeur et présente une face axiale interne 2'C qui s'étend en regard de la face axiale externe 16A du distributeur. Comme on le verra dans la suite, les conduits principaux du moteur sont ménagés dans ce couvercle de distribution 2C et la mise en communication des conduits de distribution avec ces conduits principaux se fait par l'intermédiaire de gorges ménagées entre les faces axiales 2'C et 16A en regard.

L'espace annulaire 24 comprend une partie qui est réalisée dans un évidement annulaire 25 réalisé sur la face radiale du couvercle de distribution 2C qui est tournée vers le bloc-cylindres.

L'espace annulaire 24 est disposé dans une région du moteur qui est relativement éloignée de l'axe de rotation 10. La deuxième série de dents est solidaire de la face radiale 6A du bloc-cylindres et disposée au voisinage de l'extrémité radiale externe 6'A de cette face radiale. Evidemment, les dents de la première série de dents se trouvent axialement en regard de celles de la deuxième série. Ainsi, les dents du crabot sont situées dans une région du moteur qui est éloignée de l'axe de rotation de ce dernier.

Les dents de la deuxième série de dents peuvent être réalisées monobloc dans la face radiale 6A du bloc-cylindres ou être directement fixées sur cette face radiale à l'aide de tout moyen de fixation approprié. Les dents de la première série de dents 18 sont quant à elles solidaires en rotation du carter fixe du moteur.

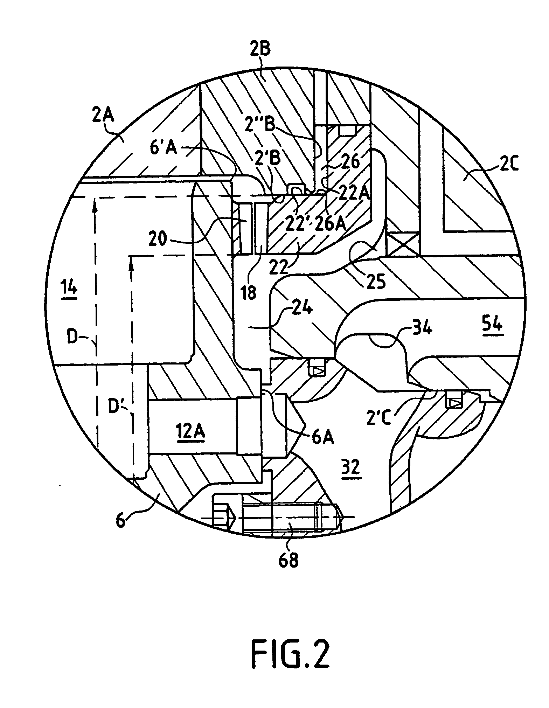

Avantageusement, comme on le voit mieux sur la figure 2, la première série de dents est solidaire du piston de commande 22 et c'est ce dernier qui est rendu solidaire en rotation du carter. Dans l'exemple avantageux représenté, le piston 22 coopère avec une couronne qui constitue l'une des pièces du carter et est fixée à l'organe de réaction par des moyens d'assemblage du carter. Plus précisément, cette couronne est constituée par la partie 2B du carter qui est disposée entre la partie 2A qui porte la came 4 et le couvercle de distribution 2C.

Les différentes pièces du carter sont, comme on l'a vu précédemment, fixées à l'aide des vis 3. Ainsi, la pièce avec laquelle coopère le piston pour le caler en rotation avec le carter constitue directement une partie de ce carter qui est fixée aux autres parties dudit carter par les vis qui sont dimensionnées pour supporter les contraintes élevées auxquelles sont soumises les pièces du carter lors du fonctionnement du moteur. Ainsi, lors du freinage, le couple de freinage passe par les vis 3 qui, constituant des moyens d'assemblage du carter, sont d'emblée dimensionnées pour supporter des couples élevés.

La couronne 2B et le piston de commande 22 présentent, sur des faces axiales en contact, respectivement une face axiale intérieure de la couronne et une face axiale extérieure du piston, des formes adaptées à solidariser le piston en rotation avec la couronne 2B.

Pour ce faire, les faces qui permettent la solidarisation en rotation du piston avec la couronne peuvent être ondulées et s'emboîter l'une dans l'autre. Par exemple, les faces 2'B et 22' peuvent être ondulées, tandis que les faces 2"B et 22" seraient cylindriques, ou vice versa.

En réalisant la solidarisation en rotation par des ondulations, on peut faire en sorte qu'un joint d'étanchéité de géométrie simple (ondulé et d'épaisseur constante) soit disposé entre les faces de la couronne et du piston pourvues de ces ondulations pour délimiter la chambre 26 de désactivation du frein décrite dans la suite.

Ces ondulations peuvent correspondre avantageusement à certaines, au moins, des ondulations de la came 4. Elles peuvent être différentes, un même ensemble de freinage, comprenant la couronne de couplage et la piston de commande peut en effet équiper des moteurs dont les cames sont différentes.

Le moteur comporte des moyens pour commander le déplacement du piston 22 entre ses positions d'engagement et de désengagement du crabot. Ainsi, une chambre 26 de désactivation du dispositif de freinage est ménagée entre le piston 22 et la couronne 2B. Cette chambre comprend des parois radiales constituées par une face radiale 22A du piston tournée vers le bloc-cylindres et par une face radiale 2"B de la couronne 2B qui lui fait face.

Pour solliciter le piston dans sa position de désengagement représentée sur la figure 1, la chambre 26 peut être alimentée en fluide par une conduite 28 de désactivation. Le raccordement sélectif de cette conduite à une source de fluide sous pression et à des moyens d'évacuation du fluide peut être assuré à l'aide d'une valve 30 de gestion du dispositif de freinage qui est située dans la partie 2C du carter. La conduite de désactivation 28 comprend un tronçon ménagé dans cette partie 2C et un tronçon ménagé dans la partie 2B. Des joints d'étanchéité délimitent de façon étanche la chambre de désactivation 26. Cette chambre est située radialement vers l'extérieur par rapport à la partie du piston qui porte les dents 18.

Le piston de commande 22 est sollicité en permanence dans le sens de l'engagement des dents du crabot par des moyens de rappel élastique, comprenant par exemple un ressort tel qu'une rondelle belleville ou plusieurs ressorts hélicoïdaux 23 régulièrement répartis angulairement (par exemple trois ressorts espacés de 120°). On voit que la chambre 26 est située globalement "vers l'extérieur" par rapport aux dents du crabot.

En d'autres termes, cette chambre est ménagée de telle sorte que la distance D à l'axe 10 de la paroi 26A de la chambre 26 qui est la plus proche de cet axe est supérieure ou égale à la distance minimale D' entre les dents du crabot (dans leurs zones d'engagement) et l'axe du moteur. Bien entendu, lorsque, comme dans l'exemple représenté, la paroi 26A de la chambre se situe en prolongement de la paroi axiale 22' du piston qui coopère en engagement en rotation avec la paroi 2'B de la couronne 2B, et lorsque les moyens de solidarisation en rotation sont formés par des ondulations, la distance D est mesurée dans les "creux" de ces ondulations.

On voit également que les moyens de rappel élastique, par exemple les ressorts 23, coopèrent avec le piston de commande 22 dans une région de ce piston qui est situé sensiblement axialement en regard de la chambre de désactivation 26.

Ainsi, la chambre de désactivation est relativement éloignée de l'axe du moteur, de même que les moyens de rappel du piston vers sa position d'engagement. Ainsi, que le piston soit sollicité vers sa position d'engagement ou sa position de désengagement, les moments de basculement générés par les frottements parasites du piston du dispositif de freinage sur les faces axiales sur lesquelles ils coulissent sont aisément surmontés et compensés par les moyens (chambre 26 ou ressort 23) qui sollicitent ce piston vers l'une ou l'autre de ces positions.

Les conduits de distribution du distributeur 16 comprennent plusieurs séries de conduits. Il s'agit tout d'abord d'une première série de conduits 32 qui sont raccordés en permanence à une première enceinte de distribution constituée, dans l'exemple représenté, par une première gorge 34 ménagée entre les faces axiales 2'C et 16A en regard, cette première enceinte étant raccordée en permanence à un premier des deux conduits principaux d'alimentation et d'échappement.

Il s'agit ensuite d'une deuxième série de conduits de distribution 36 qui sont raccordés en permanence à une deuxième enceinte constituée, dans l'exemple représenté, par une deuxième gorge 38 ménagée entre les faces axiales 2'C et 16A, cette enceinte étant raccordée en permanence au deuxième conduit principal d'alimentation ou d'échappement. Il s'agit enfin d'une troisième série de conduits de distribution 40 qui, en fonction de la position du tiroir de sélection de la cylindrée 42, sont susceptibles d'être raccordés aux conduits de la première série ou à ceux de la deuxième.

Le tiroir 42 est disposé dans un alésage axial 44 qui est situé au centre du distributeur 16 (il est centré sur l'axe 10). Le tiroir 42 présente une gorge de sélection 46 ménagée sur sa périphérie axiale externe.

Chacune des première, deuxième et troisième séries de conduits de distribution comprend au moins un conduit qui s'ouvre dans l'alésage axial 44. Dans l'exemple représenté, tous les conduits de chacune des séries s'ouvrent dans l'alésage 44, les ouvertures 33 des conduits 32 dans l'alésage 44 étant toutes situées dans un même premier tronçon axial de l'alésage. De même, les ouvertures 37 des conduits 36 dans l'alésage sont situées dans un même deuxième tronçon axial de cet alésage, tandis que les ouvertures 41 des troisièmes conduits 40 sont situées dans un même troisième tronçon axiale de l'alésage.

Ces premier, deuxième et troisième tronçons sont distincts les uns des autres, le troisième tronçon étant situé entre les deux premiers.

Ainsi, dans la première position du tiroir 42 représenté sur la moitié inférieure de la figure 1, la gorge 46 s'étend entre les premier et troisième tronçons axiaux, de sorte qu'elle fait communiquer les conduits des séries 32 et 40, tandis que la périphérie cylindrique 47 du tiroir 42 exempte de la gorge ferme les ouvertures 37. En revanche, dans la deuxième position du tiroir 42 représentée sur la partie supérieure de la figure 1, la gorge 46 relie les deuxième et troisième tronçons axiaux de l'alésage, tandis que la périphérie du tiroir exempte de la gorge ferme les ouvertures 33.

Des portions de parois sensiblement radiales de la périphérie axiale 16A du distributeur qui se trouvent dans les gorges 34 et 38 permettent, en raison de la pression de fluide régnant dans l'une ou l'autre de ces gorges, de mettre le distributeur en appui hydraulique sur le bloc-cylindres. On voit sur la figure 1 que les conduits de la troisième série 40 débouchent également sur la périphérie axiale 16A du distributeur, dans un étagement situé entre les gorges 34 et 38. En raison de la portion de paroi sensiblement radiale du distributeur qui se trouve dans cet étagement, cette disposition permet de faire en sorte que les conduits de la troisième série contribuent également à la mise en appui hydraulique du distributeur sur le bloc-cylindres.

Le distributeur 16 comporte une face de distribution 16B dans laquelle débouchent tous les conduits de distribution en formant des orifices de distribution. Cette face de distribution 16B est en appui contre la face de communication 6A du bloc-cylindres dans laquelle débouchent des conduits de cylindre 12A pour former des orifices de conduit de cylindre qui se trouvent tout à tour placés en regard des orifices de distribution au cours de la rotation du bloc-cylindres par rapport au distributeur.

Dans la coupe transversale de la figure 3, on a représenté les cylindres 12 dans lesquels sont disposés les pistons 14, qui coopèrent avec les lobes 4A de la came 4 par l'intermédiaire de rouleaux 15. On a également représenté les conduits de cylindre 12A qui sont situés, sur un même cercle, dans la région des cylindres voisine de l'axe 10. L'ensemble représenté sur la figure 3 comporte neuf ensembles d'un cylindre 12 et d'un piston 14 disposé dans ce cylindre, qui sont régulièrement répartis angulairement. La came 4 comporte quant à elle six lobes de came 4A analogues les uns aux autres.

Comme on le verra dans la suite, cette disposition est avantageuse, en particulier lorsque l'on souhaite obtenir certains rapports entre la première et la deuxième cylindrée du moteur. Toutefois, l'invention n'est pas limitée à cette disposition et l'on pourra par exemple prévoir six lobes de came 4A pour onze, voir treize ou quinze ensembles d'un cylindre et d'un piston.

Le distributeur comporte quant à lui douze conduits de distribution, disposés de telle sorte que, en pleine cylindrée du moteur, un conduit de distribution raccordé à l'alimentation et un conduit de distribution raccordé à l'échappement soit disponible pour chaque lobe de came.

Avantageusement, le rapport entre la première et la deuxième cylindrée de fonctionnement du moteur, exprimées en volume, est sensiblement égal à 1,5. En effet, on a indiqué précédemment que le moteur de l'invention pouvait en particulier servir à l'entraînement de l'arbre d'un réducteur planétaire qui sert à l'entraînement en translation d'un engin de chantier tel qu'un engin chenillé. La fonction de ces engins est assurée par des outils, par exemple des pelles, qui sont commandés hydrauliquement. De préférence, on prévoit une seule pompe hydraulique pour assurer à la fois l'alimentation de ces outils et celle du moteur hydraulique.

Cette pompe est en général dimensionnée de manière à assurer de manière optimale l'entraînement des vérins ou analogues qui actionnent hydrauliquement les outils. Classiquement, le moteur fonctionne en petite cylindrée pour des déplacements rapides, dans lesquels les outils ne sont pas sollicités, tandis qu'il fonctionne en grande cylindrée lorsque l'engin est utilisé sur un chantier, pour assurer sa fonction (par exemple creusement) et pour permettre de petits déplacements de l'engin.

Il importe que le couple délivré en petite cylindrée pour le moteur soit suffisant pour permettre certains déplacements "difficiles", en particulier pour vaincre les efforts de frottement des chenilles sur le sol lorsque l'engin doit tourner sur lui-même. On a constaté qu'en fonction du dimensionnement classique des pompes de ces engins de chantier, un rapport de la grande cylindrée sur la petite cylindrée sensiblement égal à 1,5 convient parfaitement.

La configuration comprenant neuf ensembles d'un cylindre et d'un piston et six lobes de came constitue une solution particulièrement intéressante pour assurer ce rapport de 1,5 entre la grande et la petite cylindrée, dans un faible encombrement radial (plus le nombre de cylindres est élevé, plus l'encombrement radial risque d'être important).

En effet, dans ce cas, il suffit de faire en sorte que la première série de conduits de distribution 32 comporte quatre conduits, tandis que la troisième série de conduits de distribution comporte deux conduits et que la deuxième série de conduits comporte six conduits. Deux conduits de distribution correspondent à chacun des six lobes de came. Ainsi, les quatre conduits de la première série sont respectivement disposés en correspondance avec quatre des six lobes de came, tandis que les deux conduits de la troisième série sont disposés en correspondance avec les deux lobes de came restants, et que chacun des six conduits de la deuxième série est disposé en correspondance avec chacun des six lobes de came.

Dans ce cas, en grande cylindrée, c'est-à-dire dans la position du tiroir 42 dans laquelle les conduits de la première série et ceux de la troisième série sont reliés entre eux, six conduits de distribution au total pourront être reliés à un premier des deux conduits principaux du moteur, tandis que les six autres conduits (ceux de la deuxième série) seront reliés à l'autre conduit principal. En d'autres termes, pour chaque lobe de came 4A, on dispose d'un conduit de distribution (de la première ou de la troisième série) qui sert à l'alimentation ou à l'échappement, et d'un autre conduit de distribution (de la deuxième série) qui sert à l'échappement ou à l'alimentation.

En revanche, pour le fonctionnement en petite cylindrée, lorsque le tiroir 42 occupe sa deuxième position, les deux conduits de la troisième série sont reliés aux six conduits de la deuxième série. Ainsi, pour seulement quatre des six lobes de came, on dispose d'un conduit de distribution raccordé au premier conduit principal (un conduit de la première série) et d'un conduit raccordé au deuxième conduit principal (quatre des six conduits de la deuxième série). En revanche, les deux conduits de distribution correspondant à chacun des deux lobes de came restants (un conduit de la troisième série et un conduit de la deuxième série pour chacun) seront mis à la même pression. Par conséquent, ces deux lobes de came seront inactifs.

En d'autres termes, en grande cylindrée, les six lobes de came sont actifs, tandis que seuls quatre des six lobes de came sont actifs en petite cylindrée. Le rapport entre la grande et la petite cylindrée est donc bien égal à 1,5. Le choix du nombre de pistons (9, 11, 13, 15) permet d'obtenir un moteur dont le comportement, même en petite cylindrée, est homocinétique c'est-à-dire que, pour un débit d'alimentation constant, la vitesse de sortie de l'arbre est constante quelle que soit la position angulaire du bloc-cylindres.

Lorsque les quatre conduits de la première série sont raccordés à l'alimentation alors que les conduits des deuxième et troisième séries sont raccordés à l'échappement, le moteur fonctionne selon son sens préférentiel de rotation. Dans l'autre sens de rotation, les pistons situés en regard des lobes de came inactif sont alimentés en haute pression même dans la partie descendante du lobe de came, et le sens de rotation est le sens non préférentiel.

Le fait de prévoir neuf ensembles d'un cylindre et d'un piston régulièrement répartis angulairement permet de faire en sorte que, même en petite cylindrée, les pistons soient correctement positionnés par rapport aux lobes de came actifs pour assurer la rotation du moteur.

Pour certains types d'engins, on peut avoir plutôt intérêt à faire en sorte que le rapport entre la grande et la petite cylindrée soit sensiblement égal à 3. C'est en particulier le cas lorsque le moteur est relié à l'arbre du réducteur planétaire servant à l'entraînement en translation d'une machine agricole ayant des roues ou d'un engin de travaux publics ayant des roues ou des rouleaux, par exemple des compacteurs, ces engins disposant d'outils, qui servent à assurer leur fonction et sont commandés hydrauliquement.

Comme dans le cas évoqué précédemment, on a intérêt à ne prévoir qu'une seule pompe pour assurer à la fois l'alimentation du moteur et l'alimentation du circuit de commande des outils. Pour ces engins, en situation de travail, les forces de frottement à vaincre sont moins grandes pour les entraîner sur le sol, même pour les faire tourner sur eux-mêmes, que pour des engins chenillés. On s'est aperçu qu'un rapport sensiblement égal à 3 entre la grande et la petite cylindrée convient parfaitement.

Dans le cas où le moteur de l'invention comporte neuf ensembles d'un cylindre et d'un piston et six lobes de came, ce rapport de cylindrée sensiblement égal à 3 est également très facile à obtenir. En effet, il suffit de choisir que la première série de conduits de distribution comporte deux conduits, tandis que la troisième série comporte quatre conduits, la deuxième série comportant toujours six conduits. Dans ce cas, en grande cylindrée, les six conduits comprenant les deux conduits de la première série et les quatre conduits de la troisième série sont raccordés à un premier conduit principal, tandis que les six conduits de la deuxième série sont raccordés à l'autre conduit principal. En revanche, en fonctionnement en petite cylindrée, seuls les deux conduits de la première série sont raccordés au premier conduit principal, tandis que les quatre conduits de la troisième série et les six conduits de la deuxième série sont raccordés au deuxième conduit principal. Avec la disposition indiquée précédemment, on comprend que, en petite cylindrée, seuls deux des six lobes de came sont actifs. On obtient donc effectivement un rapport de 3 entre la grande et la petite cylindrée.

Il faut noter que les rapports de cylindrée sensiblement égaux à 3 et à 1,5 peuvent être avantageux pour certaines applications, mais que l'invention s'applique bien évidemment également à des moteurs pour lesquels les rapports de cylindrée sont différents, par exemple sensiblement égaux à 2 (auquel cas, pour un moteur à six lobes de cames, on prévoit trois conduits de distribution dans les première et troisième séries de conduits de distribution, et six conduits dans la deuxième série).

On constate sur les figures 1 et 2 que les cylindres 12 et les pistons 14 sont étagés. Plus précisément, chaque piston comprend une première partie 14A, proche de l'axe de rotation 10, ainsi qu'une deuxième partie 14B, éloignée de cet axe de rotation et séparée de la première partie par un étagement 14C. La section (définie transversalement à l'axe 14D de chaque piston) de la deuxième partie 14B de chaque piston est supérieure à la section de la première partie 14A. De même, chaque cylindre 12 comprend une première partie 13A, adaptée à la première partie 14A de chaque piston et une deuxième partie 13B, adaptée à la deuxième partie 14B de chaque piston. On comprend sur la figure 3 que cette disposition permet d'obtenir une cylindrée du moteur relativement importante (volume total des cylindres) tout en permettant de disposer les pistons relativement proches les uns des autres. Ceci permet, pour une cylindrée donnée, d'obtenir un moteur de moindre encombrement radial que dans le cas où les cylindres et les pistons sont non étagés.

On a indiqué précédemment que le tiroir 42 de sélection de la cylindre est mobile entre au moins deux positions à l'intérieur de l'alésage axial 44 dans lequel il est disposé.

Plus précisément, le tiroir 42 est constamment rappelé vers l'une de ses positions (en l'espèce la deuxième) par des moyens élastiques de rappel qui, dans l'exemple représenté, comprennent un ressort hélicoïdal 64. Du côté du bloc-cylindres, l'alésage 44 dans lequel est disposé le tiroir 42 comprend un premier élément de paroi radiale 66 qui est solidaire du distributeur 16, par exemple par l'intermédiaire de vis de fixation 68. Du côté du distributeur opposé au bloc-cylindres 6, cet alésage débouche sur un deuxième élément de paroi radiale 70 qui est solidaire du carter. Par exemple, comme dans l'exemple représenté, cet élément 70 est constitué par une face radiale du couvercle de distribution 2C. Dans l'exemple représenté, le ressort 64 prend directement appui sur le premier élément de paroi radiale 66 tandis que, du côté opposé, il prend appui contre le fond 72 (qui s'étend radialement) du perçage 74 du tiroir 42 dans lequel il est disposé.

On pourrait également envisager une disposition inverse, dans laquelle le ressort 64 prendrait directement appui sur le deuxième élément de paroi radiale 70, tandis que le perçage 74 serait réalisé de manière inversée par rapport à la situation représentée sur la figure 1, le fond 72 étant disposé du côté du bloc-cylindres.

Dans l'un ou l'autre cas, on constate que l'ensemble formé par le tiroir 42 et le ressort 64 coopère en appui élastique avec les premier et deuxième éléments de paroi radiale 66 et 70, de manière à solliciter le distributeur 16 en appui contre le bloc-cylindres 6.

Dans l'exemple représenté sur la figure 1, le tiroir 42 est sollicité vers sa première position par des moyens de commande hydraulique comprenant une conduite 76 qui sert à alimenter en fluide une chambre 78 ménagée entre l'extrémité du tiroir 42 opposée au bloc-cylindres, l'élément de paroi 70, et un tronçon de la paroi cylindrique de l'alésage 44. Pour solliciter le tiroir vers sa première position ou, au contraire, permettre son rappel dans sa deuxième position, le conduit 76 peut être raccordé à une source de fluide hydraulique ou à un échappement de fluide.

On voit sur la figure 1 que le moteur comprend un palier unique 80 qui sert à la fois à la reprise des efforts radiaux et à la reprise des efforts exercés axialement dans le sens de poussée du distributeur sur le bloc-cylindres. Ce palier unique comprend des roulements coniques 82. On a indiqué par le repère P le centre de poussée du palier unique 80. On constate qu'il est situé sur l'axe de rotation 10 du moteur et qu'il est disposé au voisinage de l'intersection I de cet axe avec le plan radial défini par les axes radiaux 14D des pistons 14 du bloc-cylindres.

La face radiale 6B du bloc-cylindres 6 qui est opposée au distributeur présente un renfoncement 6'B qui s'étend dans une région correspondant aux premières parties 13A des cylindres 12. Ce renfoncement est en effet permis du fait de la moindre section de ces premières parties, par rapport aux deuxièmes parties 13B des cylindres. Cette disposition permet de disposer le palier unique 80 au moins partiellement dans le renfoncement 6'B, en diminuant encore l'encombrement axial du moteur.

Sur la figure 1, on a schématisé les positions de diverses valves de gestion du fonctionnement du moteur. On a déjà parlé de la valve 30 qui commande l'alimentation de la conduite 28.

Ces valves de gestion peuvent également comprendre un limiteur de vitesse formé par l'alésage 50 et le tiroir 52 disposé dans cet alésage. A partir de l'alésage 50 partent deux conduits, respectivement 54 et 58, qui sont des dérivations prises sur les conduites principales et qui débouchent respectivement dans les gorges 34 et 38. Le tiroir 50 gère le raccordement sélectif des conduits 54 et 58 avec la sortie du limiteur de vitesse.

Les valves de gestion comprennent également deux clapets anti-retour 84 (un seul de ces clapets est visible sur la figure 1) qui sont placés à la sortie du limiteur de vitesse et qui servent, par des conduits 86, à raccorder cette sortie avec celle des conduites principales qui est à la basse pression.

Les valves de gestion comprennent encore des clapets anti-retour. Ainsi, un organe mobile 62 disposé dans l'alésage 60 peut être placé sur la première conduite principale (un clapet analogue est placé sur la deuxième conduite principale).

Ces valves s'étendent transversalement par rapport à l'axe 10 et sont situées de l'autre côté du distributeur 16 par rapport au bloc-cylindres 6.

Sur la figure 1, on a schématisé en trait interrompu mixte la position d'un carter 90 qui peut être fixé au carter du moteur et qui contient par exemple un réducteur planétaire, avec un arbre 92, qui peut servir à l'entraînement en translation d'engins agricoles ou d'engins de chantiers, par exemple des engins chenillés ou un compacteur.

L'invention s'applique à des moteurs ayant au moins deux cylindrées distinctes de fonctionnement. Bien que l'on ait seulement précisément décrit la réalisation avantageuse à deux cylindrées distinctes de fonctionnement, il doit être entendu que l'on peut également appliquer l'invention à un moteur comprenant trois cylindrées distinctes de fonctionnement, en prévoyant de manière appropriée des moyens de commande de la sélection de la cylindrée.

## Revendications

1. Moteur hydraulique (1) comprenant :
- un carter fixe (2A, 2B, 2C),
- un organe de réaction (4) solidaire du carter,
- un bloc-cylindres (6), qui est monté à rotation relative autour d'un axe de rotation par rapport audit organe de réaction (4) et qui comporte une pluralité d'ensembles de cylindres (12) et de pistons (14), disposés radialement par rapport à l'axe de rotation (10) et susceptibles d'être alimentés en fluide sous pression,
- un distributeur interne de fluide (16), solidaire du carter (2A, 2B, 2C) vis-à-vis de la rotation (10) autour de l'axe de rotation et comportant des conduits de distribution susceptibles de mettre les cylindres (12) en communication avec des conduits d'alimentation et d'échappement de fluide,
- un dispositif de freinage comprenant un crabot ayant une première et une deuxième séries de dents (18, 20), respectivement solidaires en rotation du carter (2A, 2B, 2C) et du bloc-cylindres (6), ainsi qu'un piston de commande (22) de l'engagement et du désengagement des dents de ce crabot,
le moteur ayant au moins deux cylindrées distinctes de fonctionnement et comprenant un tiroir de sélection de cylindrée (42) situé à l'intérieur du carter (2A, 2B, 2C),
**caractérisé en ce qu'**un espace annulaire (24) est ménagé dans le carter, autour du distributeur (16), du côté de la face radiale (6A) du bloc-cylindres (6) adjacente au distributeur (16), **en ce que** la première série de dents (18) du crabot et le piston de commande (22) sont disposés dans cet espace annulaire (24) et **en ce que** la deuxième série de dents (20) est solidaire de ladite face radiale (6A) du bloc-cylindres (6), au voisinage de l'extrémité radiale externe (6B) de cette face radiale, de sorte que les dents du crabot s'étendent dans une région du moteur éloignée de l'axe de rotation (10).

2. Moteur selon la revendication 1, **caractérisé en ce que** le tiroir (42) de sélection de cylindrée est disposé dans un alésage axial (44) situé à l'intérieur du distributeur (16) et est mobile entre au moins une première et une deuxième position à l'intérieur de cet alésage, ce tiroir présentant une gorge de sélection (46) qui est située sur sa périphérie axiale, **en ce que** les conduits de distribution comprennent une première série de conduits de distribution (32) qui sont raccordés en permanence à une première enceinte de distribution (34) qui est elle-même raccordée en permanence à un premier des deux conduits d'alimentation et d'échappement, une deuxième série de conduits de distribution (36) qui sont raccordés en permanence à une deuxième enceinte de distribution (38) qui est elle-même raccordée en permanence au deuxième des deux conduits d'alimentation et d'échappement, ainsi qu'une troisième série de conduits de distribution (40) qui, dans la première position du tiroir de sélection (42), sont raccordés aux conduits de la première série de conduits de distribution (32) par la gorge de sélection (46) en étant isolés des conduits de la deuxième série (36) et qui, dans la deuxième position du tiroir de sélection (42), sont raccordés aux conduits de la deuxième série de conduits de distribution (36) par la gorge de sélection (46) en étant isolés des conduits de la première série (32), chacune des première, deuxième et troisième séries de conduits de distribution comprenant au moins un conduit qui s'ouvre dans l'alésage axial (44).

3. Moteur selon la revendication 1 ou 2, **caractérisé en ce que** le rapport entre la première et la deuxième cylindrée de fonctionnement du moteur, exprimées en volume, est sensiblement égal à 1,5.

4. Moteur selon les revendications 2 et 3, **caractérisé en ce que** l'organe de réaction (4) est une came qui présente six lobes de came analogues (4A), tandis que le bloc-cylindres (6) comporte neuf ensembles d'un cylindre (12) et d'un piston (14) mobile dans ce cylindre, régulièrement répartis angulairement, **en ce que** la première série de conduits de distribution (32) comporte quatre conduits, tandis que la troisième série de conduits de distribution (40) comporte deux conduits et que la deuxième série de conduits de distribution (36) comporte six conduits.

5. Moteur selon la revendication 1 ou 2, **caractérisé en ce que** le rapport entre la première et la deuxième cylindrée de fonctionnement du moteur, exprimées en volume, est sensiblement égal à 3.

6. Moteur selon les revendications 2 et 5, **caractérisé en ce que** l'organe de réaction (4) est une came qui présente six lobes de came (4A) analogues, tandis que le bloc-cylindres (16) comporte neuf ensembles d'un cylindre (12) et d'un piston (14) mobile dans ce cylindre, régulièrement répartis angulairement, **en ce que** la première série de conduits de distribution (32) comporte deux conduits, tandis que la troisième série de conduits de distribution (40) comporte quatre conduits et que la deuxième série de conduits de distribution (36) comporte six conduits.

7. Moteur selon l'une quelconque des revendications 1 à 6, **caractérisé en ce que** le bloc-cylindres (6) présente une face radiale plane de communication (6A), tandis que le distributeur (16) présente une face radiale plane de distribution (16B) qui est maintenue en appui contre ladite face de communication par des moyens de poussée axiale (64, 42; 16A) et **en ce qu'**il comporte un palier unique (80) de reprise des efforts radiaux et de reprise des efforts exercés axialement dans le sens de poussée desdits moyens de poussée axiale.

8. Moteur selon la revendication 7, **caractérisé en ce que** le palier unique (80) présente un centre de poussée (P) qui est situé, sur l'axe de rotation (10) du moteur, au voisinage de l'intersection (I) de cet axe avec le plan radial défini par les axes radiaux des pistons (14) du bloc-cylindres (6).

9. Moteur selon l'une quelconque des revendications 1 à 8, dans lequel le piston de commande (22) est susceptible d'être déplacé dans le sens du désengagement des dents (18, 20) du crabot par alimentation en fluide d'une chambre de désactivation du freinage (26), tandis que ledit piston est sollicité en permanence dans le sens de l'engagement des dents du crabot par des moyens de rappel élastique (23), **caractérisé en ce que** la chambre de désactivation (26), qui s'étend autour du distributeur, est ménagée de telle sorte que la distance (D), à l'axe de rotation (10) du moteur de la paroi (26A) de la chambre de désactivation (26) la plus proche de cet axe (10) est supérieure ou égale à la distance (D') minimale entre les dents (18, 20) du crabot et l'axe (10) du moteur, et **en ce que** les moyens de rappel élastique (23) coopèrent avec le piston de commande (22) dans une région dudit piston qui est située sensiblement axialement en regard de la chambre de désactivation (26).

10. Moteur selon l'une quelconque des revendications 1 à 9, **caractérisé en ce que** la première série de dents (18) est solidaire du piston de commande (22), ce dernier étant rendu solidaire en rotation du carter par coopération avec une couronne (2B) qui constitue l'une des pièces du carter et est fixée à l'organe de réaction (4) par des moyens d'assemblage (3) du carter, ladite couronne et ledit piston de commande présentant, sur des faces axiales (2'B, 22' ; 2"B, 22") en contact, respectivement une face axiale intérieure de la couronne et une face axiale extérieure du piston, des formes adaptées à cet effet.

11. Moteur selon l'une quelconque des revendications 1 à 10, **caractérisé en ce que** les pistons sont étagés, chaque piston (14) comprenant une première partie (14A), proche de l'axe de rotation et ayant une première section, ainsi qu'une deuxième partie (14B), séparée de la première partie par un étagement (14C), éloignée de l'axe de rotation (10) et ayant une deuxième section supérieure à la première section, chaque cylindre (12) ayant de même une première et une deuxième partie (13A, 13B) respectivement adaptées aux première et deuxième parties de chaque piston (14).

12. Moteur selon la revendication 11 et la revendication 7 ou 8, **caractérisé en ce que** la face radiale (6B) du bloc-cylindres (6)) éloignée du distributeur interne (16) présente un renfoncement (6'B)qui s'étend dans une région correspondant aux première parties (13A) des cylindres (12) et **en ce que** le palier unique est au moins partiellement logé dans ce renfoncement (6'B).

13. Moteur selon l'une quelconque des revendications 1 à 12, **caractérisé en ce que** des valves (30, 52, 62, 84) de gestion du fonctionnement du moteur sont disposées dans des alésages pratiqués dans le carter (2C) du moteur.

14. Moteur selon la revendication 13, **caractérisé en ce que** certaines, au moins, desdites valves s'étendent transversalement par rapport à l'axe de rotation (10) du moteur et sont situées de l'autre côté du distributeur (16) par rapport au bloc-cylindres (6).

15. Moteur selon l'une quelconque des revendications 1 à 14, **caractérisé en ce que** le tiroir de sélection de cylindrée (42) est disposé dans un alésage axial (44) ménagé dans le distributeur (16) et est mobile dans cet alésage entre au moins une première et une deuxième position, le tiroir de sélection (42) étant constamment rappelé vers l'une de ses positions dite position de repos par des moyens élastiques de rappel (64), **en ce que** l'alésage axial (44) présente, du côté du bloc-cylindres (6), un premier élément de paroi radiale (66) solidaire du distributeur (16) tandis que, du côté du distributeur (16) opposé au bloc-cylindres (6), il débouche sur un deuxième élément de paroi radiale (70) solidaire du carter (2C) de sorte que, dans la position de repos du tiroir, l'ensemble formé par le tiroir (42) et les moyens élastiques de rappel (64) coopère avec les premier et deuxième éléments de paroi radiales (66, 70) pour solliciter le distributeur (16) en appui contre le bloc-cylindres (6).

## Patentansprüche

1. Hydromotor (1), der folgendes umfaßt:
- ein festes Gehäuse (2A, 2B, 2C),
- ein Reaktionselement (4), das mit dem Gehäuse fest verbunden ist,
- einen Zylinderblock (6), der in relativer Drehung um eine Drehachse im Verhältnis zum Reaktionselement (4) angeordnet ist und der mehrere Zylinderanordnungen (12) und Kolbenanordnungen (14) umfaßt, die radial zur Drehachse (10) angeordnet und geeignet sind, durch unter Druck stehendes Fluid versorgt zu werden,
- einen internen Fluidverteiler (16), der mit dem Gehäuse (2A, 2B, 2C) bezüglich einer Drehung um die Drehachse (10) fest verbunden ist und Verteilungsleitungen umfaßt, die geeignet sind, die Zylinder (12) mit Fluidversorgungs- und -auslaßleitungen in Verbindung zu bringen,
- eine Bremsvorrichtung, welche eine Klauenkupplung mit einer ersten und einer zweiten Reihe von Zähnen (18, 20), die jeweils bezüglich Drehung mit dem Gehäuse (2A, 2B, 2C) bzw. dem Zylinderblock (6) fest verbunden sind, sowie einen Steuerkolben (22) für das Eingreifen und das Freigeben der Zähne von dieser Klauenkupplung aufweist, wobei der Motor mindestens zwei unterschiedliche Betriebshubräume aufweist und einen Schieber (42) zur Hubraumauswahl umfaßt, der im Inneren des Gehäuses (2A, 2B, 2C) angeordnet ist, **dadurch gekennzeichnet, daß** ein ringförmiger Raum (24) in dem Gehäuse um den Verteiler (16) auf der zum Verteiler (16) benachbarten radialen Fläche (6A) des Zylinderblocks (6) angeordnet ist, derart, daß die erste Reihe von Zähnen (18) der Klauenkupplung und der Steuerkolben (22) in diesem ringförmigen Raum (24) angeordnet sind und derart, daß die zweite Reihe von Zähnen (20) mit der radialen Fläche (6A) des Zylinderblocks (6) in der Nähe des äußeren radialen Endes (6B) dieser radialen Fläche fest verbunden ist, so daß sich die Zähne der Klauenkupplung in einen Bereich des Motors erstrecken, der von der Drehachse (10) entfernt ist.

2. Motor nach Anspruch 1, **dadurch gekennzeichnet, daß** der Schieber (42) zur Auswahl des Hubraums in einer axialen Bohrung (44) angeordnet ist, die sich im Inneren des Verteilers (16) befindet, und zwischen mindestens einer ersten und einer zweiten Position im Inneren dieser Bohrung beweglich ist, wobei der Schieber eine Auswahlrille (46) aufweist, die sich auf seinem axialen Umfang befindet, und dadurch, daß die Verteilungsleitungen eine erste Reihe an Verteilungsleitungen (32), die dauerhaft mit einer ersten Verteilungseinfassung (34) verbunden sind, die selbst dauerhaft mit einer ersten der zwei Versorgungs- und Auslassleitungen verbunden ist, eine zweite Reihe an Verteilungsleitungen (36), die dauerhaft mit einer zweiten Verteilungseinfassung (38) verbunden sind, die selbst dauerhaft mit der zweiten der zwei Versorgungsund Auslassleitungen verbunden ist, sowie eine dritte Reihe an Verteilungsleitungen (40) umfassen, welche, in der ersten Position des Auswahlschiebers (42), mit den Leitungen der ersten Reihe von Verteilungsleitungen (32) über die Auswahlrille (46) verbunden sind, wobei sie von den Leitungen der zweiten Reihe (36) isoliert sind, und welche, in der zweiten Position des Auswahlschiebers (42), mit den Leitungen der zweiten Reihe von Verteilungsleitungen (36) über die Auswahlrille (46) verbunden sind, wobei sie von den Leitungen der ersten Reihe (32) isoliert sind, wobei jede der ersten, zweiten und dritten Reihe der Verteilungsleitungen mindestens eine Leitung umfaßt, die sich in die axiale Bohrung (44) öffnet.

3. Motor nach Anspruch 1 oder 2, **dadurch gekennzeichnet, daß** das Verhältnis zwischen dem ersten und dem zweiten Betriebshubraum des Motors, in Volumen ausgedrückt, im wesentlichen gleich 1,5 ist.

4. Motor nach Anspruch 2 und 3, **dadurch gekennzeichnet, daß** das Reaktionselement (4) eine Nockenbahn ist, welche sechs analoge Nockenkurven (4A) aufweist, während der Zylinderblock (6) neun Anordnungen aus einem Zylinder (12) und einem Kolben (14), der im Zylinder beweglich ist, umfaßt, die winkelig regelmäßig verteilt sind, und dadurch, daß die erste Reihe von Verteilungsleitungen (32) vier Leitungen umfaßt, während die dritte Reihe von Verteilungsleitungen (40) zwei Leitungen umfaßt, und dadurch, daß die zweite Reihe von Verteilungsleitungen (36) sechs Leitungen umfaßt.

5. Motor nach Anspruch 1 oder 2, **dadurch gekennzeichnet, daß** das Verhältnis zwischen dem ersten und dem zweiten Betriebshubraum des Motors, ausgedrückt in Volumen, im wesentlichen gleich 3 ist.

6. Motor nach Anspruch 2 und 5, **dadurch gekennzeichnet, daß** das Reaktionselement (4) eine Nockenbahn ist, welche sechs analoge Nockenkurven (4A) aufweist, während der Zylinderblock (16) neun Anordnungen aus einem Zylinder (12) und einem Kolben (14), der im Zylinder beweglich ist, umfaßt, die winkelig regelmäßig verteilt sind, und dadurch, daß die erste Reihe von Verteilungsleitungen (32) zwei Leitungen umfaßt, während die dritte Reihe von Verteilungsleitungen (40) vier Leitungen umfaßt, und dadurch, daß die zweite Reihe von Verteilungsleitungen (36) sechs Leitungen umfaßt.

7. Motor nach einem der Ansprüche 1 bis 6, **dadurch gekennzeichnet, daß** der Zylinderblock (6) eine ebene radiale Verbindungsfläche (6A) aufweist, während der Verteiler (16) eine ebene radiale Verteilungsfläche (16B) aufweist, welche durch Axialschubmittel (64, 42; 16A) gegen die Verbindungsfläche gehalten wird, und dadurch, daß der Motor ein Einzellager (80) zur Aufnahme der radialen Belastungen und zur Aufnahme der Belastungen umfaßt, welche axial in die Schubrichtung der Axialschubmittel ausgeübt werden.

8. Motor nach Anspruch 7, **dadurch gekennzeichnet, daß** das Einzellager (80) ein Schubzentrum (P) aufweist, welches auf der Drehachse (10) des Motors in der Nähe des Schnittpunktes (I) dieser Achse mit der radialen Ebene angeordnet ist, die durch die radialen Achsen der Kolben (14) des Zylinderblocks (6) definiert werden.

9. Motor nach einem der Ansprüche 1 bis 8, wobei der Steuerkolben (22) geeignet ist, durch Fluidversorgung einer Deaktivierungskammer der Bremse (26) in die Richtung der Freigabe der Zähne (18, 20) der Klauenkupplung verschoben zu werden, während der Kolben dauerhaft in die Eingreifrichtung der Zähne der Klauenkupplung durch elastische Rückführmittel (23) gedrängt wird, **dadurch gekennzeichnet, daß** die Deaktivierungskammer (26), die sich um den Verteiler herum erstreckt, so angeordnet ist, daß der Abstand (D) zur Drehachse (10) des Motors jener Wand (26A) der Deaktivierungskammer (26), die der Achse (10) am nächsten liegt, größer oder gleich dem Mindestabstand (D') zwischen den Zähnen (18, 20) der Klauenkupplung und der Achse (10) des Motors ist, und dadurch, daß die elastischen Rückführmittel (23) mit dem Steuerkolben (22) in einem Bereich des Kolbens zusammenwirken, der im wesentlichen axial zur Deaktivierungskammer (26) angeordnet ist.

10. Motor nach einem der Ansprüche 1 bis 9, **dadurch gekennzeichnet, daß** die erste Reihe von Zähnen (18) mit dem Steuerkolben (22) fest verbunden ist, wobei letzterer durch Zusammenwirken mit einem Kranz (2B) mit dem Gehäuse drehfest verbunden ist, welcher einen der Teile des Gehäuses darstellt und der am Reaktionselement (4) durch Zusammenbau-mittel (3) des Gehäuses befestigt ist, wobei der Kranz und der Steuerkolben auf in Kontakt stehenden axialen Flächen (2'B, 22'; 2"B, 22") eine innere axiale Fläche des Kranzes bzw. eine äußere axiale Fläche des Kolbens mit zu diesem Zweck angepaßten Formen aufweisen.

11. Motor nach einem der Ansprüche 1 bis 10, **dadurch gekennzeichnet, daß** die Kolben stufenweise angeordnet sind, wobei jeder Kolben (14) einen ersten Teil (14A), der sich nahe bei der Drehachse befindet und einen ersten Abschnitt aufweist, und einen zweiten Teil (14B) aufweist, der vom ersten Teil durch eine Abstufung (14C) getrennt ist, entfernt von der Drehachse (10), und mit einem zweiten Abschnitt, der größer als der erste Abschnitt ist, wobei jeder Zylinder (12) ebenfalls einen ersten und einen zweiten Teil (13A, 13B) aufweist, die an den ersten bzw. den zweiten Teil von jedem Kolben (14) angepaßt sind.

12. Motor nach Anspruch 11 und Anspruch 7 oder 8, **dadurch gekennzeichnet, daß** die radiale Fläche (6B) des Zylinderblocks (6), welche vom internen Verteiler (16) entfernt ist, eine Vertiefung (6'B) aufweist, welche sich in einen Bereich erstreckt, der den ersten Teilen (13A) der Zylinder (12) entspricht, und dadurch, daß das Einzellager zumindest teilweise in dieser Vertiefung (6'B) untergebracht ist.

13. Motor nach einem der Ansprüche 1 bis 12, **dadurch gekennzeichnet, daß** Ventile (30, 52, 62, 84) zur Betriebsführung des Motors in Bohrungen angeordnet sind, die im Gehäuse (2C) des Motors ausgebildet sind.

14. Motor nach Anspruch 13, **dadurch gekennzeichnet, daß** zumindest bestimmte der Ventile sich quer zur Drehachse (10) des Motors erstrecken und in Bezug auf den Zylinderblock (6) auf der anderen Seite des Verteilers (16) angeordnet sind.

15. Motor nach einem der Ansprüche 1 bis 14, **dadurch gekennzeichnet, daß** der Hubraumauswahlschieber (42) in einer Axialbohrung (44), die im Verteiler (16) ausgebildet ist, angeordnet und in der Bohrung zwischen mindestens einer ersten und einer zweiten Position beweglich ist, wobei der Auswahlschieber (42) fortlaufend zu einer seiner Positionen, die als Ruheposition bezeichnet wird, durch elastische Rückführmittel (64) rückgeführt wird, derart, daß die Axialbohrung (44) auf der Seite des Zylinderblocks (6) ein erstes radiales Wandelement (66) aufweist, das mit dem Verteiler (16) einstückig ist, während sie auf der Seite des Verteilers (16), welche dem Zylinderblock (6) gegenüberliegt, in ein zweites radiales Wandelement (70) mündet, das mit dem Gehäuse (2C) einstückig ist, so daß die Anordnung, die durch den Schieber (42) und die elastischen Rückführmittel (64) gebildet wird, in der Ruheposition des Schiebers mit den ersten und den zweiten radialen Wandelementen (66, 70) zusammenwirkt, um den Verteiler (16) gegen den Zylinderblock (6) zu drängen.

## Claims

1. A hydraulic motor (1) comprising:
· a stationary case (2A, 2B, 2C);
· a reaction member (4) secured to the case;
· a cylinder block (6) mounted to rotate about an axis of rotation relative to said reaction member (4) and having a plurality of assemblies of cylinders (12) and pistons (14), the assemblies being disposed radially relative to the axis of rotation (10) and being suitable for being fed with fluid under pressure;
· an internal fluid distributor (16) constrained in rotation (10) relative to the case (2A, 2B, 2C) about the axis of rotation and having distribution ducts suitable for putting the cylinders (12) into communication with fluid feed and exhaust ducts; and
· a braking device comprising a dog clutch having first and second series of teeth (18, 20) respectively constrained in rotation with the case (2A, 2B, 2C) and with the cylinder block (6), and a control piston (22) for controlling engagement and disengagement of the teeth of the dog clutch; the motor having at least two distinct operating cylinder capacities and including a cylinder capacity selection slide (42) situated inside the case (2A, 2B, 2C),
the motor being **characterised in that** an annular space (24) is provided inside the case around the distributor (16) beside the radial face (6A) of the cylinder block (6) adjacent to the distributor (16), **in that** the first series of teeth (18) of the dog clutch and its control piston (22) are disposed in said annular space (24), and **in that** the second series of teeth (20) is secured to said radial face (6A) of the cylinder block (6) in the vicinity of the outer radial end (6B) of said radial face, such that the teeth of the dog clutch occupy a region of the motor that is remote from the axis of rotation (10).

2. A motor according to claim 1, **characterised in that** the cylinder capacity selection slide (42) is disposed in an axial bore (44) situated inside the distributor (16) and is movable at least between a first position and a second position inside said bore, the slide having a selection groove (46) which is situated in its radial periphery, and **in that** the distribution ducts comprise a first series of distribution ducts (32) which are permanently connected to a first distribution enclosure (34) which is itself permanently connected to a first of the two feed and exhaust ducts, a second series of distribution ducts (36) which are permanently connected to a second distribution enclosure (38) which is itself permanently connected to a second of the two feed and exhaust ducts, and a third series of distribution ducts (40) which, in the first position of the selection slide (42) are connected to the ducts of the first series of distribution ducts (32) via the selection groove (46) and are isolated from the ducts of the second series (36), and which, in the second position of the selection slide (42) are connected to the ducts of the second series of distribution ducts (36) via the selection groove (46) while being isolated from the ducts of the first series (32), each of the first, second, and third series of distribution ducts comprising at least one duct which opens out into the axial bore (44).

3. A motor according to claim 1 or 2, **characterised in that** the ratio between the first and second operating cylinder capacities of the motor, in volume terms, is substantially equal to 1.5.

4. A motor according to claims 2 and 3, **characterised in that** the reaction member (4) is a cam having six similar cam lobes (4A), while the cylinder block (6) has nine assemblies each comprising a cylinder (12) and a piston (14) movable in the cylinder, which assemblies are uniformly distributed angularly, and **in that** the first series of distribution ducts (32) has four ducts, while the third series of distribution ducts (40) has two ducts and the second series of distribution ducts (36) has six ducts.

5. A motor according to claim 1 or 2, **characterised in that** the ratio between the first and second operating cylinder capacities of the motor, in volume terms, is substantially equal to 3.

6. A motor according to claims 2 and 5, **characterised in that** the reaction member (4) is a cam having six similar cam lobes (4A), while the cylinder block (6) has nine assemblies each comprising a cylinder (12) and a piston (14) movable in the cylinder, which assemblies are uniformly distributed angularly, and **in that** the first series of distribution ducts (32) has two ducts, while the third series of distribution ducts (40) has four ducts and the second series of distribution ducts (36) has six ducts.

7. A motor according to any one of claims 1 to 6, **characterised in that** the cylinder block (6) has a plane radial communication face (6A), while the distributor (16) has a plane radial distribution face (16B) which is held pressed against said communication face by axial thrust means (64, 42; 16A), and **in that** it has a single bearing (80) for taking up radial forces and for taking up forces exerted axially in the thrust direction of said axial thrust means.

8. A motor according to claim 7, **characterised in that** the single bearing (80) has a centre of thrust (P) which is situated, on the axis of rotation (10) of the motor, in the vicinity of the intersection (I) between said axis and the radial plane defined by the radial axes of the pistons (14) of the cylinder block (6).

9. A motor according to any one of claims 1 to 8, in which the control piston (22) is suitable for being displaced in the direction for disengaging the teeth (18, 20) of the dog clutch by feeding fluid to a braking deactivation chamber (26), while said piston is permanently urged in the direction for engaging the teeth of the dog clutch by resilient return means (23), the motor being **characterised in that** the deactivation chamber (26) which extends around the distributor is organized in such a manner that the distance (D) to the axis of rotation (10) of the motor from the wall (26A) of the deactivation chamber (26) that is the closest to said axis (10) is greater than or equal to the minimum distance (D') between the teeth (18, 20) of the dog clutch and the axis (10) of the motor, and **in that** the resilient return means (23) co-operate with the control piston (22) in a region of said piston which is situated substantially axially facing the deactivation chamber (26).

10. A motor according to any one of claims 1 to 9, **characterised in that** the first series of teeth (18) is secured to the control piston (22), the control piston being constrained in rotation with the case by co-operation between a ring (2B) which constitutes one of the parts of the case and is fixed to the reaction member (4) by the assembly means (3) of the case, said ring and said control piston presenting, on contacting axial faces (2'B, 22'; 2"B, 22"), respectively a radially inner face of the ring and a radially outer face of the piston, shapes that are adapted to this purpose.

11. A motor according to any one of claims 1 to 10, **characterised in that** the pistons are stepped, each piston (14) having a first portion (14A) close to the axis of rotation and having a first section, and a second portion (14B) remote from the axis of rotation (10) and separated from the first portion via a step (14C), and having a second section that is greater than the first section, each cylinder (12) likewise having first and second portions (13A, 13B) respectively matching the first and second portions of each piston (14).

12. A motor according to claim 11 and claim 7 or 8, **characterised in that** the radial face (6B) of the cylinder block (6) that is remote from the internal distributor (16) has a setback (6'B) which extends in a region corresponding to the first portions (13A) of the cylinders (12), and **in that** the single bearing is received at least in part in said setback (6'B).

13. A motor according to any one of claims 1 to 12, **characterised in that** valves (30, 52, 62, 84) for controlling the operation of the motor are disposed in bores formed in the case (2C) of the motor.

14. A motor according to claim 13, **characterised in that** at least some of said valves extend transversely relative to the axis of rotation (10) of the motor and are situated on the opposite side of the distributor (16) relative to the cylinder block (6).

15. A motor according to any one of claims 1 to 14, **characterised in that** the cylinder capacity selection slide (42) is disposed in an axial bore (44) formed in the distributor (16) and is movable in said bore between at least a first position and a second position, the selection slide (42) being constantly urged towards one of said positions, referred to as the "rest" position, by resilient return means (64), and **in that**, at the cylinder block end (6), the axial bore (44) has a first radial wall element (66) secured to the distributor (16), and at the distributor end (16) and opposite the cylinder block (6) the axial bore opens out to a second radial wall element (70) secured to the case (2C) in such a manner that, in the rest position of the slide, the assembly formed by the slide (42) and the resilient return means (64) co-operates with the first and second radial wall elements (66, 70) to urge the distributor (16) to press against the cylinder block (6).
